(19)

Europäisches Patentamt

European Patent Office

Office européen des brevets

(11) **EP 4 391 116 A1**

(12) **EUROPEAN PATENT APPLICATION**
published in accordance with Art. 153(4) EPC

(43) Date of publication:
**26.06.2024 Bulletin 2024/26**

(21) Application number: **22858263.1**

(22) Date of filing: **25.07.2022**

(51) International Patent Classification (IPC):
$H01M\ 4/62^{(2006.01)}$  $H01G\ 11/38^{(2013.01)}$
$H01M\ 4/13^{(2010.01)}$  $H01M\ 4/139^{(2010.01)}$

(52) Cooperative Patent Classification (CPC):
**H01G 11/38; H01M 4/13; H01M 4/139; H01M 4/62;**
**Y02E 60/10**

(86) International application number:
**PCT/JP2022/028623**

(87) International publication number:
**WO 2023/021941 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.08.2021 JP 2021133109**

(71) Applicant: **ENEOS Materials Corporation Tokyo, 105-7109 (JP)**

(72) Inventors:
• **NAKAYAMA, Takuya**
  **Tokyo 105-0021 (JP)**
• **ASAI, Yuta**
  **Tokyo 105-0021 (JP)**
• **MAEGAWA, Maki**
  **Tokyo 105-0021 (JP)**

(74) Representative: **TBK**
  **Bavariaring 4-6**
  **80336 München (DE)**

(54) **POWER STORAGE DEVICE BINDER COMPOSITION, POWER STORAGE DEVICE ELECTRODE SLURRY, POWER STORAGE DEVICE ELECTRODE, AND POWER STORAGE DEVICE**

(57)     Provided is a binder composition for an electrical storage device, which is excellent in adhesiveness and can improve the charge-discharge durability characteristic of an electrical storage device. The binder composition for an electrical storage device includes: a polymer (A); and a liquid medium (B), wherein when a total of repeating units in the polymer (A) is defined as 100 mass%, the polymer (A) contains 1 mass% to 40 mass% of a repeating unit (a1) derived from an unsaturated carboxylic acid ester having an alicyclic hydrocarbon group, and 45 mass% to 90 mass% of a repeating unit (a2) derived from an unsaturated carboxylic acid ester having an aliphatic hydrocarbon group excluding the unsaturated carboxylic acid ester having an alicyclic hydrocarbon group, and wherein the polymer (A) shows a swelling ratio of 120 mass% or more and 200 mass% or less when immersed in a solvent, which is formed of propylene carbonate and diethyl carbonate at a volume fraction of 1:1, under conditions of 70°C and 24 hours.

**EP 4 391 116 A1**

**Description**

Technical Field

The present invention relates to a binder composition for an electrical storage device, a slurry for an electrical storage device electrode, containing the binder composition and an active material, an electrical storage device electrode formed by applying the slurry onto a current collector and drying the resultant, and an electrical storage device including the electrical storage device electrode.

Background Art

In recent years, an electrical storage device having a high voltage and a high energy density has been demanded as a power source for driving electronic equipment. A lithium ion battery, a lithium ion capacitor, or the like is promising as such electrical storage device.

An electrode to be used for such electrical storage device is produced by applying a composition (slurry for an electrical storage device electrode) containing an active material and a polymer that functions as a binder to a surface of a current collector and drying the resultant. Characteristics that the polymer to be used as the binder is required to have may include: a binding ability between the active materials, and an adhesive ability between the active material and the current collector; abrasion resistance in a step of winding up the electrode; and powder fall-off resistance that prevents fine powder or the like of the active material from falling off the applied and dried composition coating film (hereinafter sometimes referred to as "active material layer") even when cutting or the like is subsequently performed. Such binder material expresses satisfactory adhesiveness and reduces internal resistance of a battery resulting from the binder material, thereby being able to impart a satisfactory charge-discharge characteristic to the electrical storage device.

With regard to the binding ability between the active materials, the adhesive ability between the active material and the current collector, and the powder fall-off resistance, it has been empirically revealed that their qualities of performance have a nearly proportional relationship with each other. Accordingly, those properties are hereinafter sometimes collectively referred to with the term "adhesiveness".

In recent years, out of the positive electrode active materials of the electrical storage devices, a lithium-containing phosphoric acid compound having an olivine structure having high safety (olivine-type lithium-containing phosphoric acid compound) has been adopted. In the olivine-type lithium-containing phosphoric acid compound, phosphorus and oxygen are covalently bonded to each other. Accordingly, the compound has high thermal stability, and hence does not release oxygen even under high temperatures.

However, the olivine-type lithium-containing phosphoric acid compound has a low output voltage because the occlusion-release voltage of Li ions is around 3.4 V. To compensate for the drawback, an attempt has been made to improve the characteristics of peripheral materials, such as an electrode binder and an electrolytic solution (see Patent Literatures 1 to 3).

Citation List

Patent Literature

[PTL 1] JP 2007-294323 A
[PTL 2] WO 2010/113940 A1
[PTL 3] JP 2012-216322 A

Summary of Invention

Technical Problem

With such technology including improving the characteristics of peripheral materials, such as an electrode binder and an electrolytic solution, as disclosed in each of Patent Literatures 1 to 3 described above, it has been difficult to sufficiently improve the charge-discharge durability characteristic of an electrical storage device including a positive electrode containing the olivine-type lithium-containing phosphoric acid compound as a positive electrode active material, though the output voltage of the electrical storage device is improved.

In view of the foregoing, some aspects according to the present invention provide a binder composition for an electrical storage device, which is excellent in adhesiveness and can improve the charge-discharge durability characteristic of an electrical storage device. In addition, some aspects according to the present invention provide a slurry for an electrical storage device electrode, which is excellent in adhesiveness and can improve the charge-discharge durability characteristic of an electrical storage device. In addition, some aspects according to the present invention provide an electrical storage device electrode, which is excellent in adhesiveness and can improve the charge-discharge durability characteristic of an electrical storage device. Further, some aspects according to the present invention provide an electrical storage device excellent in charge-discharge durability characteristic.

Solution to Problem

The present invention has been made in order to solve at least part of the above-mentioned problems, and can be realized as any one of the following aspects.

According to one aspect of the present invention, there is provided a binder composition for an electrical storage device, including:

a polymer (A); and
a liquid medium (B),
wherein when a total of repeating units in the polymer (A) is defined as 100 mass%, the polymer (A) contains

1 mass% to 40 mass% of a repeating unit (a1) derived from an unsaturated carboxylic acid ester having an alicyclic hydrocarbon group, and
45 mass% to 90 mass% of a repeating unit (a2) derived from an unsaturated carboxylic acid ester having an aliphatic hydrocarbon group excluding the unsaturated carboxylic acid ester having an alicyclic hydrocarbon group, and

wherein the polymer (A) shows a swelling ratio of 120 mass% or more and 200 mass% or less when immersed in a solvent, which is formed of propylene carbonate and diethyl carbonate at a volume fraction of 1:1, under conditions of 70°C and 24 hours.

In the binder composition for an electrical storage device according to the one aspect, the polymer (A) may further contain 0.1 mass% to 10 mass% of a repeating unit (a5) derived from an unsaturated carboxylic acid.

In the binder composition for an electrical storage device according to any one of the above-mentioned aspects, the polymer (A) may further contain 1 mass% to 14 mass% of a repeating unit (a6) derived from an aromatic vinyl compound.

In the binder composition for an electrical storage device according to any one of the above-mentioned aspects, a total amount of the repeating unit (a1) and the repeating unit (a2) in the polymer (A) may be 70 mass% or more.

In the binder composition for an electrical storage device according to any one of the above-mentioned aspects, when the polymer (A) is subjected to differential scanning calorimetry (DSC) in conformity with JIS K7121:2012, an endothermic peak may be observed in a temperature range of from -60°C to 60°C.

In the binder composition for an electrical storage device according to any one of the above-mentioned aspects,

the polymer (A) may be polymer particles, and
the polymer particles may have a number average particle diameter of 50 nm or more and 500 nm or less.

In the binder composition for an electrical storage device according to any one of the above-mentioned aspects, the polymer (A) may have a surface acidity of 0.05 mmol/g or more and 3 mmol/g or less.

According to one aspect of the present invention, there is provided a slurry for an electrical storage device electrode, including:

the binder composition for an electrical storage device of any one of the above-mentioned aspects; and
an active material.

In the slurry for an electrical storage device electrode according to the one aspect, the active material may be a positive electrode active material.

In the slurry for an electrical storage device electrode according to the one aspect, the active material may contain a silicon material.

According to one aspect of the present invention, there is provided an electrical storage device electrode, including:

a current collector; and
an active material layer formed on a surface of the current collector by applying and drying the slurry for an electrical storage device electrode of any one of the above-mentioned aspects.

According to one aspect of the present invention, there is provided an electrical storage device, including the electrical storage device electrode of the above-mentioned aspect.

Advantageous Effects of Invention

According to the binder composition for an electrical storage device according to the present invention, there is provided the electrical storage device excellent in charge-discharge durability characteristic because the composition is excellent in adhesiveness.

Description of Embodiments

Preferred embodiments of the present invention are described in detail below. It should be appreciated that the present invention is not limited to the following embodiments, and includes various modification examples performed within the range not changing the gist of the present invention.
Herein, the term "(meth)acrylic acid ···" refers to "acrylic acid ···" or "methacrylic acid ···". In addition, the term "··· (meth)acrylate" refers to "··· acrylate" or "··· methacrylate".

1. Binder Composition for Electrical Storage Device

A binder composition for an electrical storage device according to an embodiment of the present invention contains a polymer (A) and a liquid medium (B). When the total of repeating units in the polymer (A) is defined as 100 mass%, the polymer (A) contains 1 mass% to 40 mass% of a repeating unit (a1) derived from an unsaturated carboxylic acid ester having an alicyclic hydrocarbon group, and 45 mass% to 90 mass% of a repeating unit (a2) derived from an unsaturated carboxylic acid ester having an aliphatic hydrocarbon group excluding the unsaturated carboxylic acid ester having an alicyclic hydrocarbon group. In addition, the polymer (A) shows a swelling ratio of 120 mass% or more and 200 mass% or less when immersed in a solvent, which is formed of propylene carbonate and diethyl carbonate at a volume fraction of 1:1, under the conditions of 70°C and 24 hours.
The binder composition for an electrical storage device according to this embodiment may be used as a material for producing an electrical storage device electrode (active material layer) improved in binding ability between the active materials and adhesive ability between the active material and a current collector, and in powder fall-off resistance, and may also be used as a material for forming a protective film for suppressing a short circuit due to dendrites generated along with charge and discharge. Each component contained in the binder composition for an electrical storage device according to this embodiment is described in detail below.

1.1. Polymer (A)

The binder composition for an electrical storage device according to this embodiment contains the polymer (A). When the total of the repeating units in the polymer (A) is defined as 100 mass%, the polymer (A) contains 1 mass% to 40 mass% of the repeating unit (a1) derived from an unsaturated carboxylic acid ester having an alicyclic hydrocarbon group (hereinafter sometimes referred to simply as "repeating unit (a1)"), and 45 mass% to 90 mass% of the repeating unit (a2) derived from an unsaturated carboxylic acid ester having an aliphatic hydrocarbon group (hereinafter sometimes referred to simply as "repeating unit (a2)"). In addition, the polymer (A) may contain, in addition to the above-mentioned repeating units, a repeating unit derived from another monomer copolymerizable therewith.
The polymer (A) in the binder composition for an electrical storage device according to this embodiment may be in the form of latex dispersed in the liquid medium (B), or may be in a state of being dissolved in the liquid medium (B), but is preferably in the form of latex dispersed in the liquid medium (B). A case in which the polymer (A) is in the form of latex dispersed in the liquid medium (B) is preferred because the stability of a slurry for an electrical storage device electrode (hereinafter sometimes referred to simply as "slurry") produced by mixing the binder composition with an active material becomes satisfactory, and besides, the coating property of the slurry for a current collector becomes satisfactory.
The constituent repeating units of the polymer (A), the physical properties of the polymer (A), and a production method therefor are described below in the stated order.

1.1.1. Constituent Repeating Units of Polymer (A)

1.1.1.1. Repeating Unit (a1) derived from Unsaturated Carboxylic Acid Ester having Alicyclic Hydrocarbon Group

When the total of the repeating units in the polymer (A) is defined as 100 mass%, the content ratio of the repeating unit (a1) derived from an unsaturated carboxylic acid ester having an alicyclic hydrocarbon group is from 1 mass% to 40 mass%. The lower limit of the content ratio of the repeating unit (a1) is preferably 1 mass%, more preferably 3 mass%, particularly preferably 10 mass%. The upper limit of the content ratio of the repeating unit (a1) is preferably 40 mass%, more preferably 35 mass%, particularly preferably 30 mass%. When the polymer (A) contains the repeating unit (a1) in the above-mentioned ranges, the swelling of the polymer (A) in an electrolytic solution is moderately reduced, and hence the coverage of the polymer (A) on the active material at the time of the production of the electrode is maintained. As a result, the insertion and extraction of Li into and from the active material are facilitated, and hence the internal resistance of an electrical storage device can be reduced. Accordingly, the device shows a satisfactory charge-discharge characteristic.

Examples of the unsaturated carboxylic acid ester having an alicyclic hydrocarbon group may include, but not particularly limited to, cyclohexyl (meth)acrylate, dicyclopentanyl (meth)acrylate, and isobornyl (meth)acrylate, and one or more kinds selected therefrom may be used. Of those, cyclohexyl (meth)acrylate is particularly preferred.

1.1.1.2. Repeating Unit (a2) derived from Unsaturated Carboxylic Acid Ester having Aliphatic Hydrocarbon Group

When the total of the repeating units in the polymer (A) is defined as 100 mass%, the content ratio of the repeating unit (a2) derived from an unsaturated carboxylic acid ester having an aliphatic hydrocarbon group excluding the unsaturated carboxylic acid ester having an alicyclic hydrocarbon group is from 45 mass% to 90 mass%. The lower limit of the content ratio of the repeating unit (a2) is preferably 45 mass%, more preferably 50 mass%, particularly preferably 55 mass%. The upper limit of the content ratio of the repeating unit (a2) is preferably 90 mass%, more preferably 85 mass%, particularly preferably 80 mass%. When the polymer (A) contains the repeating unit (a2) in the above-mentioned ranges, the dispersibility of an active material or a filler becomes satisfactory. Thus, it becomes possible to produce a uniform active material layer or protective film. Accordingly, a structural defect in the electrode plate of the electrical storage device is eliminated, and hence the device shows a satisfactory charge-discharge characteristic. In addition, stretching and shrinking properties can be imparted to the polymer (A) covering the surface of the active material, and adhesiveness can be improved by virtue of stretching and shrinking of the polymer (A). Accordingly, the device shows a satisfactory charge-discharge durability characteristic.

In the present invention, an unsaturated carboxylic acid ester having both of an alicyclic hydrocarbon group and an aliphatic hydrocarbon group belongs to the unsaturated carboxylic acid ester having an alicyclic hydrocarbon group.

The unsaturated carboxylic acid ester having an aliphatic hydrocarbon group is not particularly limited, and a (meth)acrylic acid ester is preferred. Specific examples of such (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, n-octyl (meth)acrylate, 2-ethylhexyl (meth)acrylate, nonyl (meth)acrylate, and decyl (meth)acrylate, and one or more kinds selected therefrom may be used. Of those, one or more kinds selected from methyl (meth)acrylate, ethyl (meth)acrylate, n-butyl (meth)acrylate, and 2-ethylhexyl (meth)acrylate are preferred, and one or more kinds selected from n-butyl (meth)acrylate and 2-ethylhexyl (meth)acrylate are more preferred.

1.1.1.3. Other Repeating Units

The polymer (A) may contain, in addition to the repeating unit (a1) and the repeating unit (a2), a repeating unit derived from another monomer copolymerizable therewith. Examples of such repeating unit include: a repeating unit (a3) derived from a polyfunctional (meth)acrylic acid ester (hereinafter sometimes referred to simply as "repeating unit (a3)"); a repeating unit (a4) derived from another unsaturated carboxylic acid ester (hereinafter sometimes referred to simply as "repeating unit (a4)"); a repeating unit (a5) derived from an unsaturated carboxylic acid (hereinafter sometimes referred to simply as "repeating unit (a5)"); a repeating unit (a6) derived from an aromatic vinyl compound (hereinafter sometimes referred to simply as "repeating unit (a6)"); a repeating unit (a7) derived from (meth)acrylamide (hereinafter sometimes referred to simply as "repeating unit (a7)"); a repeating unit (a8) derived from an $\alpha,\beta$-unsaturated nitrile compound (hereinafter sometimes referred to simply as "repeating unit (a8)"); a repeating unit (a9) derived from a compound having a sulfonic acid group (hereinafter sometimes referred to simply as "repeating unit (a9)"); and a repeating unit derived from a cationic monomer.

<Repeating Unit (a3) derived from Polyfunctional (Meth)acrylic Acid Ester>

The polymer (A) may contain the repeating unit (a3) derived from a polyfunctional (meth)acrylic acid ester. When the polymer (A) contains the repeating unit (a3), it may be easier to reduce the swelling ratio of the polymer (A) in an electrolytic solution.

In the present invention, the term "polyfunctional" means that the (meth)acrylic acid ester further has one or more kinds of functional groups selected from a polymerizable double bond and an epoxy group in addition to a polymerizable double bond that the ester has.

Specific examples of the polyfunctional (meth)acrylic acid ester may include glycidyl (meth)acrylate, allyl (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, and ethylene di(meth)acrylate, and one or more kinds selected therefrom may be used. Of those, one or more kinds selected from allyl (meth)acrylate and ethylene glycol di(meth)acrylate are preferred, and allyl (meth)acrylate is particularly preferred.

When the total of the repeating units in the polymer (A) is defined as 100 mass%, the content ratio of the repeating unit (a3) in the polymer (A) is preferably from 0.1 mass% to 10 mass%, more preferably from 1 mass% to 8 mass%. The content ratio of the repeating unit (a3) preferably falls within the ranges because it becomes easier to reduce the swelling ratio of the polymer (A) in such an electrolytic solution as described above. When the content ratio is equal to or more than the lower limit value, the swelling ratio of the polymer (A) can be reduced, and hence the coverage thereof on the active material is maintained. Thus, an increase in internal resistance of the electrical storage device can be reduced without inhibition of the insertion and extraction of Li ions. As a result, the device shows a satisfactory charge-discharge characteristic. Meanwhile, when the content ratio is equal to or less than the upper limit value, the polymer (A) becomes flexible, and hence can impart flexibility to the electrode of the device. Accordingly, a structural defect hardly occurs. As a result, the device shows a satisfactory charge-discharge characteristic.

<Repeating Unit (a4) derived from Other Unsaturated Carboxylic Acid Ester>

The polymer (A) may contain the repeating unit (a4) derived from another unsaturated carboxylic acid ester. In the present invention, the other unsaturated carboxylic acid ester refers to an unsaturated carboxylic acid ester other than the unsaturated carboxylic acid ester having an alicyclic hydrocarbon group, the unsaturated carboxylic acid ester having an aliphatic hydrocarbon group, and the polyfunctional (meth)acrylic acid ester.

Examples of the other unsaturated carboxylic acid ester include an unsaturated carboxylic acid ester having a hydroxy group and an unsaturated carboxylic acid ester having a phenoxy group. The unsaturated carboxylic acid ester having a hydroxy group is not particularly limited, but examples thereof include 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, and glycerin mono(meth)acrylate. An example of the unsaturated carboxylic acid ester having a phenoxy group is phenoxy diethylene glycol (meth)acrylate. Of those, 2-hydroxyethyl (meth)acrylate and glycerin mono(meth)acrylate are preferred. One or more kinds selected therefrom may each be used as the other unsaturated carboxylic acid ester.

When the total of the repeating units in the polymer (A) is defined as 100 mass%, the content ratio of the repeating unit (a4) in the polymer (A) is preferably from 0 mass% to 10 mass%, more preferably from 1 mass% to 8 mass%. When the polymer (A) contains the repeating unit (a4) in the above-mentioned ranges, the dispersibility of an active material or a filler in a slurry becomes satisfactory in some cases. In addition, an active material layer to be obtained has moderate flexibility, resulting in an improvement in adhesiveness between a current collector and the active material layer in some cases.

<Repeating Unit (a5) derived from Unsaturated Carboxylic Acid>

The polymer (A) may contain the repeating unit (a5) derived from an unsaturated carboxylic acid. The unsaturated carboxylic acid is not particularly limited, but examples thereof may include monocarboxylic acids and dicarboxylic acids (including anhydrides), such as acrylic acid, methacrylic acid, crotonic acid, maleic acid, fumaric acid, and itaconic acid, and one or more kinds selected therefrom may be used. One or more kinds selected from acrylic acid, methacrylic acid, and itaconic acid are each preferably used as the unsaturated carboxylic acid.

When the total of the repeating units in the polymer (A) is defined as 100 mass%, the content ratio of the repeating unit (a5) derived from the unsaturated carboxylic acid is preferably from 0.1 mass% to 10 mass%, more preferably from 1 mass% to 8 mass%. When the polymer (A) contains the repeating unit (a5) in the above-mentioned ranges, the dispersibility of an active material or a filler becomes satisfactory. Thus, it becomes possible to produce a uniform active material layer or protective film. Accordingly, a structural defect in the electrode plate of the electrical storage device is eliminated, and hence the device shows a satisfactory charge-discharge characteristic.

<Repeating Unit (a6) derived from Aromatic Vinyl Compound>

The polymer (A) may contain the repeating unit (a6) derived from an aromatic vinyl compound. The aromatic vinyl compound is not particularly limited, but examples thereof may include styrene, α-methylstyrene, p-methylstyrene, vinyltoluene, chlorostyrene, and divinylbenzene, and one or more kinds selected therefrom may be used.

When the total of the repeating units in the polymer (A) is defined as 100 mass%, the content ratio of the repeating unit (a6) derived from an aromatic vinyl compound is preferably from 1 mass% to 14 mass%, more preferably from 2 mass% to 12 mass%. When the polymer (A) contains the repeating unit (a6) in the above-mentioned ranges, the polymer shows a satisfactory binding force on a positive electrode active material or the like to be used as an active material. Thus, an electrical storage device electrode excellent in flexibility and adhesiveness is obtained.

<Repeating Unit (a7) derived from (Meth)acrylamide>

The polymer (A) may contain the repeating unit (a7) derived from (meth)acrylamide. The (meth)acrylamide is not particularly limited, but examples thereof may include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, maleic acid amide, and acrylamide tert-butylsulfonic acid, and one or more kinds selected therefrom may be used.

When the total of the repeating units in the polymer (A) is defined as 100 mass%, the content ratio of the repeating unit (a7) derived from (meth)acrylamide is preferably from 0 mass% to 5 mass%, more preferably from 1 mass% to 4 mass%. When the polymer (A) contains the repeating unit (a7) in the above-mentioned ranges, the dispersibility of an active material or a filler in a slurry becomes satisfactory in some cases. In addition, an active material layer to be obtained has moderate flexibility, resulting in an improvement in adhesiveness between a current collector and the active material layer in some cases.

<Repeating Unit (a8) derived from α,β-Unsaturated Nitrile Compound>

The polymer (A) may contain the repeating unit (a8) derived from an α,β-unsaturated nitrile compound. The α,β-unsaturated nitrile compound is not particularly limited, but examples thereof may include acrylonitrile, methacrylonitrile, α-chloroacrylonitrile, α-ethylacrylonitrile, and vinylidene cyanide, and one or more kinds selected therefrom may be used. Of those, one or more kinds selected from acrylonitrile and methacrylonitrile are preferred, and acrylonitrile is particularly preferred.

When the total of the repeating units in the polymer (A) is defined as 100 mass%, the content ratio of the repeating unit (a8) derived from an α,β-unsaturated nitrile compound is preferably from 0 mass% to 10 mass%, more preferably from 1 mass% to 8 mass%. When the polymer (A) contains the repeating unit (a8) in the above-mentioned ranges, the affinity of the polymer (A) for an electrolytic solution can be improved. Thus, the insertion and extraction of Li ions are facilitated, and hence the electrical storage device shows a satisfactory charge-discharge characteristic in some cases.

<Repeating Unit (a9) derived from Compound having Sulfonic Acid Group>

The polymer (A) may contain the repeating unit (a9) derived from a compound having a sulfonic acid group. The compound having a sulfonic acid group is not particularly limited, but examples thereof include compounds, such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, 2-hydroxy-3-acrylamidopropanesulfonic acid, and 3-allyloxy-2-hydroxypropanesulfonic acid, and alkali salts thereof, and one or more kinds selected therefrom may be used.

When the total of the repeating units in the polymer (A) is defined as 100 mass%, the content ratio of the repeating unit (a9) derived from the compound having a sulfonic acid group is preferably from 0 mass% to 10 mass%, more preferably from 1 mass% to 6 mass%. When the polymer (A) contains the repeating unit (a9) in the above-mentioned ranges, the dispersibility of an active material or a filler becomes satisfactory. Thus, it becomes possible to produce a uniform active material layer or protective film. Accordingly, a structural defect in the electrode plate of the electrical storage device is eliminated, and hence the device shows a satisfactory charge-discharge characteristic in some cases.

<Repeating Unit derived from Cationic Monomer>

The polymer (A) may contain the repeating unit derived from a cationic monomer. The cationic monomer is not particularly limited, but is preferably at least one kind of monomer selected from the group consisting of: a secondary amine (salt); a tertiary amine (salt); and a quaternary ammonium salt. Specific examples of those cationic monomers include, but not particularly limited to, 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer (A)

1.1.2.1. Electrolytic Solution Swelling Ratio

The swelling ratio (hereinafter sometimes referred to as "electrolytic solution swelling ratio") of the polymer (A) at the time of its immersion in the solvent, which is formed of propylene carbonate and diethyl carbonate at a volume fraction of 1:1, under the conditions of 70°C and 24 hours is 120 mass% or more and 200 mass% or less, preferably 130 mass% or more and 190 mass% or less, more preferably 130 mass% or more and 180 mass% or less. When the electrolytic solution swelling ratio of the polymer (A) falls within the above-mentioned ranges, the polymer (A) can absorb the electrolytic solution to moderately swell. As a result, a lithium ion that has undergone solvation can easily reach the active material. Further, when the electrolytic solution swelling ratio falls within the above-mentioned ranges, the coverage of the polymer (A) on the active material reduces, and hence the electrode resistance of the electrical storage device is effectively reduced. Thus, the device shows a satisfactory charge-discharge characteristic.

1.1.2.2. Number Average Particle Diameter

When the polymer (A) is particles, the number average particle diameter of the particles is preferably 50 nm or more and 500 nm or less, more preferably 60 nm or more and 450 nm or less, particularly preferably 70 nm or more and 400 nm or less. When the number average particle diameter of the particles of the polymer (A) falls within the above-mentioned ranges, the particles of the polymer (A) are easily adsorbed onto the surface of the active material, and hence the particles of the polymer (A) can also move following the movement of the active material. As a result, migration can be reduced, and hence a degradation in electrical characteristic can be reduced in some cases.

The number average particle diameter of the particles of the polymer (A) may be calculated from the average value of particle diameters obtained from images of the 50 particles observed with a transmission electron microscope (TEM). An example of the transmission electron microscope is "H-7650" manufactured by Hitachi High-Technologies Corporation.

1.1.2.3. Glass Transition Temperature

The polymer (A) preferably has an endothermic peak in the temperature range of from -60°C to 60°C when subjected to differential scanning calorimetry (DSC) in conformity with JIS K7121:2012. The temperature of the endothermic peak (i.e., a glass transition temperature (Tg)) more preferably falls within the range of 60°C or less, and particularly preferably falls within the range of 50°C or less. A case in which the peak temperature falls within the above-mentioned ranges is preferred because the polymer (A) can impart more satisfactory flexibility and more satisfactory stickiness to the active material layer.

1.1.2.4. Surface Acidity

When the polymer (A) is particles, the surface acidity of the particles is preferably 0.05 mmol/g or more and 3 mmol/g or less, more preferably 0.1 mmol/g or more and 2.8 mmol/g or less, particularly preferably 0.2 mmol/g or more and 2.5 mmol/g or less. When the surface acidity of the particles of the polymer (A) falls within the above-mentioned ranges, a stable and homogeneous slurry can be produced. When the active material layer is produced by using such homogeneous slurry, an active material layer in which the active material and the particles of the polymer (A) are uniformly dispersed to reduce thickness variation is obtained. As a result, variation in charge-discharge characteristic in an electrode can be reduced, and hence an electrical storage device showing a satisfactory charge-discharge characteristic is obtained.

1.1.3. Production Method for Polymer (A)

A production method for the polymer (A) is not particularly limited, but for example, the polymer (A) may be produced by an emulsion polymerization method to be performed in the presence of a known emulsifier (surfactant), chain transfer agent, polymerization initiator, and the like. Compounds described in JP 5999399 B2 and the like may be used as the emulsifier (surfactant), the chain transfer agent, and the polymerization initiator.

The emulsion polymerization method for synthesizing the polymer (A) may be performed by one-stage polymerization, or may be performed by multistage polymerization involving two or more stages of polymerization.

When the synthesis of the polymer (A) is performed by one-stage polymerization, a mixture of the above-mentioned monomers may be subjected to emulsion polymerization in the presence of an appropriate emulsifier, chain transfer agent, polymerization initiator, and the like at preferably from 40°C to 80°C for preferably from 4 hours to 36 hours.

When the synthesis of the polymer (A) is performed by two-stage polymerization, the polymerization of each stage is preferably set as described below.

The use ratio of monomers to be used in the first stage polymerization is set to fall within preferably the range of from 20 mass% to 99 mass%, more preferably the range of from 25 mass% to 99 mass% with respect to the total mass of monomers (sum of the mass of the monomers to be used in the first stage polymerization and the mass of monomers to be used in the second stage polymerization). A case in which the first stage polymerization is performed at such use ratio of the monomers is preferred because, in this case, particles of the polymer (A) which are excellent in dispersion stability, and hence hardly cause aggregation can be obtained, and besides, an increase in viscosity of the binder composition for an electrical storage device over time is also reduced.

The kinds and use ratio of the monomers to be used in the second stage polymerization may be the same as or different from the kinds and use ratio of the monomers to be used in the first stage polymerization.

Polymerization conditions in each stage are preferably set as described below from the viewpoint of the dispersibility of the particles of the polymer (A) to be obtained.

·First stage polymerization: a temperature of preferably from 40°C to 80°C; a polymerization time of preferably from 2 hours to 36 hours; and a polymerization conversion rate of preferably 50 mass% or more, more preferably 60 mass% or more.

·Second stage polymerization: a temperature of preferably from 40°C to 80°C; and a polymerization time of preferably from 2 hours to 18 hours.

When a total solid content concentration in the emulsion polymerization is set to 50 mass% or less, the polymerization reaction can be allowed to proceed under a state in which the dispersion stability of the particles of the polymer (A) to be obtained is satisfactory. The total solid content concentration is preferably 48 mass% or less, more preferably 45 mass% or less.

Irrespective of whether the synthesis of the polymer (A) is performed as one-stage polymerization or by a two-stage polymerization method, after the completion of the emulsion polymerization, a neutralizer is preferably added to the polymerization mixture. The pH range is preferably adjusted to from about 4.5 to about 10.5, preferably from 5 to 10, more preferably from 5.5 to 9.5. The neutralizer to be used in this case is not particularly limited, but examples thereof include: metal hydroxides, such as sodium hydroxide and potassium hydroxide; and ammonia. When the pH is set to fall within the above-mentioned pH ranges, the stability of the polymer (A) becomes satisfactory. When the polymerization mixture is subjected to neutralization treatment before being concentrated, its solid content concentration can be increased while satisfactory stability of the polymer (A) is maintained.

1.1.4. Content Ratio of Polymer (A)

The content ratio of the polymer (A) in the binder composition for an electrical storage device according to this embodiment is preferably from 10 mass% to 100 mass%, more preferably from 20 mass% to 95 mass%, particularly preferably from 25 mass% to 90 mass% in 100 mass% of a polymer component. Herein, the polymer component includes, in addition to the polymer (A), for example, a polymer other than the polymer (A) and a thickener which are described later.

1.2. Liquid Medium (B)

The binder composition for an electrical storage device according to this embodiment contains the liquid medium (B). The liquid medium (B) is preferably an aqueous medium containing water, and is more preferably water. The aqueous medium may contain a non-aqueous medium other than water. Examples of the non-aqueous medium may include an amide compound, a hydrocarbon, an alcohol, a ketone, an ester, an amine compound, a lactone, a sulfoxide, and a sulfone compound, and one or more kinds selected therefrom may be used. When the binder composition for an electrical storage device according to this embodiment uses the aqueous medium as the liquid medium (B), the binder composition adversely affects an environment to a less degree and is highly safe for a worker who handles the binder composition.

The content ratio of the non-aqueous medium in the aqueous medium is preferably 10 mass% or less, more preferably 5 mass% or less in 100 mass% of the aqueous medium. It is particularly preferred that the aqueous medium be substantially free of the non-aqueous medium. Herein, the phrase "be substantially free" merely means that the non-aqueous medium is not intentionally added as the liquid medium, and the aqueous medium may contain the non-aqueous medium that is inevitably mixed during the preparation of the binder composition for an electrical storage device.

### 1.3. Other Additives

The binder composition for an electrical storage device according to this embodiment may contain an additive other than the above-mentioned components as required. Examples of such additive include a polymer other than the polymer (A), a preservative, and a thickener.

### 1.3.1. Polymer other than Polymer (A)

The binder composition for an electrical storage device according to this embodiment may contain a polymer other than the polymer (A). Such polymer is not particularly limited, but examples thereof include: an acrylic polymer containing an unsaturated carboxylic acid ester or a derivative thereof as a constituent unit; and a fluoropolymer such as polyvinylidene fluoride (PVDF). Those polymers may be used alone or in combination thereof. The incorporation of any such polymer further improves flexibility and adhesiveness in some cases.

### 1.3.2. Preservative

The binder composition for an electrical storage device according to this embodiment may contain a preservative. The incorporation of the preservative can reduce the generation of foreign matter due to the growth of bacteria, mold, or the like during the storage of the binder composition for an electrical storage device in some cases. Specific examples of the preservative include compounds described in JP 5477610 B1.

### 1.3.3. Thickener

The binder composition for an electrical storage device according to this embodiment may contain a thickener. The incorporation of the thickener can further improve the coating property of a slurry, the charge-discharge characteristic of an electrical storage device to be obtained, and the like in some cases.

Specific examples of the thickener may include: cellulose compounds, such as carboxymethyl cellulose, methyl cellulose, and hydroxypropyl cellulose; polysaccharides such as alginic acid; poly(meth)acrylic acid; ammonium salts or alkali metal salts of the cellulose compound or the poly(meth)acrylic acid; polyvinyl alcohol-based (co)polymers, such as polyvinyl alcohol, modified polyvinyl alcohol, and an ethylene-vinyl alcohol copolymer; and water-soluble polymers such as a saponified product of a copolymer of an unsaturated carboxylic acid, such as (meth)acrylic acid, maleic acid, or fumaric acid, and a vinyl ester. Of those, an alkali metal salt of carboxymethyl cellulose, an alkali metal salt of poly(meth)acrylic acid, and the like are preferred.

As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).

When the binder composition for an electrical storage device according to this embodiment contains the thickener, the content ratio of the thickener is preferably 5 mass% or less, more preferably from 0.1 mass% to 3 mass% with respect to 100 mass% of the total solid content of the binder composition for an electrical storage device.

### 1.4. pH of Binder Composition for Electrical Storage Device

The pH of the binder composition for an electrical storage device according to this embodiment is preferably from 4.5 to 10.5, more preferably from 5 to 10, particularly preferably from 5.5 to 9.5. When the pH falls within the above-mentioned ranges, the occurrence of a problem, such as lack of a leveling property or liquid dripping, can be reduced. As a result, the production of an electrical storage device electrode achieving both a satisfactory electrical characteristic and satisfactory adhesiveness is facilitated.

Herein, the "pH" refers to a physical property measured as described below: a value measured at 25°C in conformity to JIS Z8802:2011 with a pH meter using a glass electrode calibrated with a neutral phosphate standard solution and a borate standard solution serving as pH standard solutions. Examples of such pH meter include "HM-7J" manufactured by DKK-TOA Corporation and "D-51" manufactured by Horiba, Ltd.

The pH of the binder composition for an electrical storage device may be affected by the composition of the constituent monomers of the polymer (A), but the pH is not determined by the monomer composition alone. That is, it is known that the pH of a binder composition for an electrical storage device generally varies depending on polymerization conditions and the like even for the same monomer composition, and Examples herein are merely some examples thereof.

For example, even for the same monomer composition, the case of loading all the unsaturated carboxylic acid into a polymerization reaction liquid at the beginning, and then sequentially adding the other monomers, and the case of loading the monomers other than the unsaturated carboxylic acid into a polymerization reaction liquid, and finally adding the unsaturated carboxylic acid give different amounts of carboxy groups derived from the unsaturated carboxylic acid exposed on the surface of the polymer to be obtained. Thus, it is conceived that the pH of the binder composition for an electrical storage device is significantly changed merely by changing the order in which the monomers are added in the polymerization method.

2. Slurry for Electrical Storage Device

A slurry for an electrical storage device according to an embodiment of the present invention contains the above-mentioned binder composition for an electrical storage device. The above-mentioned binder composition for an electrical storage device may be used as a material for producing a protective film for suppressing a short circuit due to dendrites generated along with charge and discharge, and may also be used as a material for producing an electrical storage device electrode (active material layer) improved in binding ability between the active materials and adhesive ability between the active material and a current collector, and in powder fall-off resistance. For this reason, the slurry for an electrical storage device for producing a protective film (hereinafter sometimes referred to as "slurry for a protective film"), and the slurry for an electrical storage device for producing the active material layer of an electrical storage device electrode (hereinafter sometimes referred to as "slurry for an electrical storage device electrode") are separately described.

2.1. Slurry for Protective Film

The "slurry for a protective film" refers to a dispersion to be used for producing a protective film on the surface of an electrode or a separator, or the surfaces of both thereof by being applied to the surface of the electrode or the separator, or the surfaces of both thereof, and then dried. The slurry for a protective film according to this embodiment may consist only of the above-mentioned binder composition for an electrical storage device, or may further contain an inorganic filler. An example of the inorganic filler is an inorganic filler described in JP 2020-184461 A.

2.2. Slurry for Electrical Storage Device Electrode

The "slurry for an electrical storage device electrode" refers to a dispersion to be used for producing an active material layer on the surface of a current collector by being applied to the surface of the current collector and then dried. The slurry for an electrical storage device electrode according to this embodiment contains the above-mentioned binder composition for an electrical storage device, and an active material. The components in the slurry for an electrical storage device electrode according to this embodiment are described below.

2.2.1. Polymer (A)

The composition, physical properties, production method, and the like of the polymer (A) are as described above, and hence the description thereof is omitted.

The content ratio of the polymer component in the slurry for an electrical storage device electrode according to this embodiment is preferably from 1 part by mass to 8 parts by mass, more preferably from 1 part by mass to 7 parts by mass, particularly preferably from 1.5 parts by mass to 6 parts by mass with respect to 100 parts by mass of the active material. When the content ratio of the polymer component falls within the above-mentioned ranges, the dispersibility of the active material in the slurry becomes satisfactory, and the coating property of the slurry also becomes excellent. Herein, the polymer component includes the polymer (A), and for example, the polymer other than the polymer (A) and the thickener which are added as required.

2.2.2. Active Material

Examples of the active material to be used for the slurry for an electrical storage device electrode according to this embodiment include a positive electrode active material and a negative electrode active material. Specific examples thereof include a carbon material, a silicon material, an oxide containing a lithium atom, a sulfur compound, a lead compound, a tin compound, an arsenic compound, an antimony compound, an aluminum compound, a conductive polymer such as polyacene, a composite metal oxide represented by $A_X B_Y O_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10 > X > 0.05$, $4.00 > Y > 0.85$, and $5.00 > Z > 1.5$, respectively), and other metal oxides. Specific examples thereof include compounds described in JP 5999399 B2.

The slurry for an electrical storage device electrode according to this embodiment may be used in the production of any one of electrical storage device electrodes including a positive electrode and a negative electrode, but is preferably used for the positive electrode.

Examples of the oxide containing a lithium atom include one or more kinds selected from lithium atom-containing oxides (olivine-type lithium-containing phosphoric acid compounds) each of which is represented by the following general formula (1) and has an olivine-type crystal structure.

$$Li_{1-x}M_x(AO_4) \cdots \qquad (1)$$

In the formula (1), M represents an ion of at least one kind of metal selected from the group consisting of: Mg; Ti; V; Nb; Ta; Cr; Mn; Fe; Co; Ni; Cu; Zn; Al; Ga; Ge; and Sn, A represents at least one kind selected from the group consisting of: Si; S; P; and V, and "x" represents a number satisfying the relationship of $0 < x < 1$.

The value of "x" in the general formula (1) is selected in accordance with the valences of M and A so that the valence of the entirety of the general formula (1) may be zero-valent.

Examples of the olivine-type lithium-containing phosphoric acid compound include $LiFePO_4$, $LiCoPO_4$, $LiMnPO_4$, and $Li_{0.90}Ti_{0.05}Nb_{0.05}Fe_{0.30}Co_{0.30}Mn_{0.30}PO_4$. Of those, $LiFePO_4$ (lithium iron phosphate) is particularly preferred because an iron compound serving as a raw material therefor is easily available and inexpensive.

The average particle diameter of the olivine-type lithium-containing phosphoric acid compound preferably falls within the range of from 1 $\mu$m to 30 $\mu$m, more preferably falls within the range of from 1 $\mu$m to 25 $\mu$m, and particularly preferably falls within the range of from 1 $\mu$m to 20 $\mu$m.

In addition, active materials given as examples below may each be incorporated into the active material layer. The examples include: a conductive polymer such as polyacene; a composite metal oxide represented by $A_X BYO_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10 > X > 0.05$, $4.00 > Y > 0.85$, and $5.00 > Z > 1.5$, respectively); and other metal oxides. Examples of such composite metal oxide include lithium cobaltate, lithium nickelate, lithium manganate, and ternary lithium nickel cobalt manganate.

An electrical storage device electrode produced by using the slurry for an electrical storage device electrode according to this embodiment can show a satisfactory electrical characteristic even in the case of using the oxide containing a lithium atom as the positive electrode active material. A conceivable reason therefor is that the polymer (A) can firmly bind the oxide containing a lithium atom, and at the same time, can maintain the state of firmly binding the oxide containing a lithium atom even during charge and discharge.

Meanwhile, when the negative electrode is produced, the slurry preferably contains the carbon material among the active materials given as examples above. The carbon material undergoes a smaller volume change along with charge and discharge than that of the silicon material, and hence, through use of a mixture of the silicon material and the carbon material as the negative electrode active material, the influence of the volume change of the silicon material can be alleviated. Accordingly, the adhesive ability between the active material layer and a current collector can be further improved.

### 2.2.3. Other Components

In addition to the above-mentioned components, other components may be added to the slurry for an electrical storage device electrode according to this embodiment as required. Examples of such components include a polymer other than the polymer (A), a thickener, a liquid medium, a conductive aid, a pH adjusting agent, a corrosion inhibitor, and a cellulose fiber. The polymer other than the polymer (A) and the thickener may be appropriately selected from the compounds given as examples in the "1.3. Other Additives" section, and may be used for similar purposes and at similar content ratios.

<Liquid Medium>

A liquid medium may be further added to the slurry for an electrical storage device electrode according to this embodiment in addition to the liquid medium included in the binder composition for an electrical storage device. The liquid medium to be added may be the same kind of liquid medium as the liquid medium (B) included in the binder composition for an electrical storage device or may be different therefrom, but a liquid medium selected from the liquid media given as examples in the "1.2. Liquid Medium (B)" section is preferably used.

The content ratio of the liquid medium (including the liquid medium included in the binder composition for an electrical storage device) in the slurry for an electrical storage device electrode according to this embodiment is set to such a ratio that the solid content concentration in the slurry (which refers to the ratio of the total mass of the components other than the liquid medium in the slurry to the total mass of the slurry. The same applies hereinafter.) becomes preferably from 30 mass% to 70 mass%, more preferably from 40 mass% to 60 mass%.

<Conductive Aid>

A conductive aid may be further added to the slurry for an electrical storage device electrode according to this embodiment for the purposes of imparting conductivity and buffering the volume change of the active material caused by the entrance and exit of lithium ions.

Specific examples of the conductive aid include carbons, such as activated carbon, acetylene black, ketjen black, furnace black, black lead, a carbon fiber, fullerene, and a carbon nanotube. Of those, acetylene black or a carbon nanotube may be preferably used. The content ratio of the conductive aid is preferably 20 parts by mass or less, more preferably from 1 part by mass to 15 parts by mass, particularly preferably from 2 parts by mass to 10 parts by mass with respect to 100 parts by mass of the active material.

<pH Adjusting Agent/Corrosion Inhibitor>

A pH adjusting agent and/or a corrosion inhibitor may be further added to the slurry for an electrical storage device electrode according to this embodiment for the purpose of reducing the corrosion of a current collector depending on the kind of the active material.

Examples of the pH adjusting agent may include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Of those, sulfuric acid, ammonium sulfate, sodium hydroxide, and potassium hydroxide are preferred. In addition, a pH adjusting agent selected from the neutralizers described in the production method for the polymer (A) may also be used.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

<Cellulose Fiber>

A cellulose fiber may be further added to the slurry for an electrical storage device electrode according to this embodiment. The addition of the cellulose fiber can improve the adhesiveness of the active material with respect to a current collector in some cases. It is conceived that the fibrous cellulose fiber fibrously binds the adjacent the active materials to each other by linear adhesion or linear contact, and thus can prevent the detachment of the active material and can also improve adhesiveness with respect to a current collector.

2.2.4. Preparation Method for Slurry for Electrical Storage Device Electrode

The slurry for an electrical storage device electrode according to this embodiment may be a slurry produced by any method as long as the slurry contains the above-mentioned binder composition for an electrical storage device and an active material. From the viewpoint of more efficiently and inexpensively producing a slurry having more satisfactory dispersibility and stability, the slurry is preferably produced by adding the active material and optionally added components to be used as required to the binder composition for an electrical storage device, and mixing the components. A specific example of the production method is a method described in JP 5999399 B2.

3. Electrical Storage Device Electrode

An electrical storage device electrode according to an embodiment of the present invention includes a current collector and an active material layer formed on the surface of the current collector by applying and drying the above-mentioned slurry for an electrical storage device electrode. Such electrical storage device electrode may be produced by applying the above-mentioned slurry for an electrical storage device electrode to the surface of the current collector such as metal foil to form a coating film, and then drying the coating film to form the active material layer. The thus produced electrical storage device electrode has the active material layer, which contains the above-mentioned polymer (A), active material, and optional components added as required, bound to the surface of the current collector. Accordingly, the electrode is excellent in adhesiveness, and hence an electrical storage device excellent in charge-discharge durability characteristic is obtained.

The current collector is not particularly limited as long as the current collector is formed of a conductive material, but an example thereof is a current collector described in JP 5999399 B2.

4. Electrical Storage Device

An electrical storage device according to an embodiment of the present invention includes the above-mentioned electrical storage device electrode and further contains an electrolytic solution, and may be produced in accordance with a conventional method through use of parts such as a separator. A specific example of the production method may be a method involving: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, for example, a coin shape, a cylindrical shape, a square shape, or a laminate shape.

The electrolytic solution may be a liquid or a gel, and an electrolytic solution effectively expressing a function as a battery may be selected from known electrolytic solutions to be used for electrical storage devices depending on the kind of the active material. The electrolytic solution may be a solution obtained by dissolving an electrolyte in an appropriate solvent. Examples of such electrolyte and solvent include compounds described in JP 5999399 B2.

The above-mentioned electrical storage device may be applied to, for example, a lithium ion secondary battery, an electric double layer capacitor, and a lithium ion capacitor each of which needs to be discharged at a high current density. Of those, a lithium ion secondary battery is particularly preferred. In the electrical storage device electrode and the electrical storage device according to the above-mentioned embodiments, known members for lithium ion secondary batteries, for electric double layer capacitors, and for lithium ion capacitors may be used as members other than the binder composition for an electrical storage device.

5. Examples

The present invention is specifically described below by way of Examples, but the present invention is by no means limited to these Examples. The terms "part(s)" and "%" in Examples and Comparative Examples are by mass, unless otherwise stated.

5.1. Example 1

5.1.1. Preparation of Binder Composition for Electrical Storage Device

150 Parts by mass of water and 0.2 part by mass of sodium dodecylbenzenesulfonate were loaded into a separable flask having a volume of 7 liters, and the inside of the separable flask was sufficiently purged with nitrogen.

Meanwhile, 60 parts by mass of water, 0.8 part by mass of an ether sulfate-type emulsifying agent (product name: "ADEKA REASOAP SR-1025", manufactured by Adeka Corporation) serving as an emulsifying agent in terms of solid content, and 1 part by mass of cyclohexyl methacrylate (CHMA), 3 parts by mass of acrylonitrile (AN), 58 parts by mass of 2-ethylhexyl acrylate (2EHA), 10 parts by mass of n-butyl acrylate (BA), 5 parts by mass of n-butyl methacrylate (BMA), 5 parts by mass of ethyl acrylate (EA), 2 parts by mass of allyl methacrylate (AMA), 2 parts by mass of acrylamide (AAM), 10 parts by mass of styrene (ST), 1 part by mass of sodium styrenesulfonate (NASS), and 3 parts by mass of acrylic acid (AA) serving as monomers were loaded into another container, and were sufficiently stirred to prepare a monomer emulsion containing the mixture of the above-mentioned monomers.

An increase in temperature in the separable flask was started, and at the time point when the internal temperature reached 60°C, 0.5 part by mass of ammonium persulfate was added as a polymerization initiator. Then, at the time point when the temperature in the separable flask reached 70°C, the addition of the monomer emulsion prepared in the foregoing was started. While the temperature in the separable flask was maintained at 70°C, the monomer emulsion was slowly added over 3 hours. After that, the temperature in the separable flask was increased to 85°C, and while the temperature was maintained for 3 hours, a polymerization reaction was performed. 3 Hours thereafter, the separable flask was cooled to stop the reaction, and then ammonia water was added to adjust the pH of the reaction product to 8.0. Thus, an aqueous dispersion containing 30 mass% of particles each formed of the polymer (A) was obtained.

5.1.2. Evaluations of Physical Properties of Polymer (A)

The electrolytic solution swelling ratio, glass transition temperature (Tg), pH, number average particle diameter, and surface acidity of the polymer (A) obtained in the foregoing were measured. In the measurement of each of the pH, the number average particle diameter, and the surface acidity, the aqueous dispersion of the polymer (A) was used as a measurement sample. The measurement results are shown in Table 1.

(1) Measurement of Electrolytic Solution Swelling Ratio

The polymer (A) obtained in the foregoing was dried in a thermostat at 40°C for 24 hours to produce a film. 1 g of the film was immersed in 20 mL of a mixed liquid formed of propylene carbonate (PC) and diethyl carbonate (DEC) (PC/DEC=1/1 (volume ratio); this mixed liquid is hereinafter referred to as "PC/DEC"), and the whole was left at rest at 70°C for 24 hours. Then, an insoluble content was separated by filtration through a wire mesh of 300 mesh, and then the PC/DEC of a soluble content was removed by evaporation. The weight (Y (g)) of the resultant residue was measured. In addition, the PC/DEC adhering to the surface of the insoluble content (film) separated by the above-mentioned filtration was removed through absorption by paper, and then the weight (Z (g)) of the insoluble content (film) was measured. An electrolytic solution swelling ratio was calculated by the following equation.

$$\text{Electrolytic solution swelling ratio (mass\%)} = (Z/(1\text{-}Y)) \times 100$$

(2) Measurement of Glass Transition Temperature

The polymer (A) obtained in the foregoing was subjected to measurement with a differential scanning calorimeter (manufactured by NETZSCH Geratebau GmbH, DSC204F1 Phoenix) in conformity with JIS K7121:2012, and the temperature of its endothermic peak was determined.

(3) Measurement of pH

The aqueous dispersion of the polymer (A) obtained in the foregoing was measured for its pH at 25°C with a pH meter (manufactured by Horiba, Ltd.).

(4) Measurement of Number Average Particle Diameter

One droplet of latex obtained by diluting the aqueous dispersion of the polymer (A) obtained in the foregoing to 0.1 wt% was dropped onto a collodion support film with a pipette, and one droplet of a 1 wt% phosphotungstic acid solution was further dropped onto the collodion support film with a pipette, followed by air drying for 12 hours to prepare a sample. The thus prepared sample was observed with a transmission electron microscope (TEM, manufactured by Hitachi High-Technologies Corporation, model: "H-7650") at a magnification of 10K×. Image analysis was performed with the program of HITACHI EMIP, and the number average particle diameter of 50 randomly selected particles of the polymer (A) was calculated.

(5) Measurement of Surface Acidity

The surface acidity of the particles of the polymer (A) obtained in the foregoing was measured as described below. First, it was recognized that 0.005 mol/L sulfuric acid was loaded into a reagent bottle in the upper portion of the main body of the titration burette of a potentiometric titrator (manufactured by Kyoto Electronics Manufacturing Co., Ltd., model: "AT-510"), and it was recognized that the conductivity of ultrapure water was 2 μS or less. Next, to remove air in the burette, purging was performed, and bubbles were removed from its nozzle. After that, about 1 g of the polymer (A) obtained in the foregoing in terms of solid content was collected in a 300-milliliter beaker, and its sample weight was recorded. Ultrapure water was added to the polymer to dilute the polymer to 200 mL, and then a 1 mol/L aqueous solution of sodium hydroxide was dropped thereinto. When the endpoint of the titration was reached, the mixture was stirred for about 30 seconds, and it was recognized that its conductivity became stable. The RESET button of the measurement program of the titrator was pressed to bring the titrator into a measurement standby state. The START button of the measurement program was pressed to start measurement with the 0.005 mol/L sulfuric acid. When the endpoint of the measurement is reached, the measurement is automatically ended, and a file is stored. Accordingly, the resultant curve was analyzed, and the surface acidity was determined from the used amount of the sulfuric acid by the following equation.

Surface acidity (mmol/g)=amount [mL] of acid used in carboxylic acid areas on surfaces of particles×concentration [mol/L] of acid×degree of ionization/sample weight [g]/1,000

5.1.3. Preparation of Slurry for Nonaqueous Secondary Battery Positive Electrode

2 Parts by mass (value in terms of solid content, added as the aqueous dispersion of the polymer (A) obtained in the foregoing) of the polymer (A), 100 parts by mass of NMC 622 (product name: "ME-8A", manufactured by Beijing Dangsheng Material Technology Co., Ltd.) serving as a positive electrode active material, 5 parts by mass of acetylene black, 1 part by mass of a thickener (product name: "CMC-2200", manufactured by Daicel Corporation), and 20 parts by mass of water were loaded into a twin-screw planetary mixer (manufactured by PRIMIX Corporation, product name: "T.K. HIVIS MIX 2P-03"), and were stirred at 60 rpm for 1 hour. NMC 622 is an example of a positive electrode active material.

After that, the mixture was stirred for 1 hour to provide a paste. Water was added to the resultant paste to adjust its solid content concentration to 70%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum (about $5.0×10^3$ Pa) at 1,800 rpm for 1.5 minutes. Thus, a slurry for a nonaqueous secondary battery positive electrode was prepared.

5.1.4. Production of Positive Electrode for Nonaqueous Secondary Battery and Evaluations of its Physical Properties

5.1.4.1. Production of Positive Electrode for Nonaqueous Secondary Battery

The slurry for a nonaqueous secondary battery positive electrode obtained in the foregoing was uniformly applied to the surface of a current collector formed of aluminum foil having a thickness of 20 μm by a doctor blade method so that its thickness after drying became 100 μm, followed by drying at 120°C for 20 minutes. After that, press working was performed with a roll pressing machine so that the density of the formed film (positive electrode active material layer) became 3.0 g/cm$^3$. Thus, a positive electrode for a nonaqueous secondary battery was obtained.

5.1.4.2. Evaluations of Physical Properties of Positive Electrode for Nonaqueous Secondary Battery

<Evaluation of Adhesive Strength>

In the surface of the positive electrode for a nonaqueous secondary battery obtained in the foregoing, ten cuts each having a depth extending from the active material layer to the current collector were made with a knife at intervals of 2 mm in each of longitudinal and latitudinal directions, to thereby make cuts in a grid shape. A pressure-sensitive adhesive tape having a width of 18 mm (manufactured by Nichiban Co., Ltd., product name: "Cellotape" (trademark), specified in JIS Z1522:2009) was attached to the cuts and immediately peeled off, and the degree of detachment of the active material was evaluated by visual judgment. Evaluation criteria are as described below. The evaluation result is shown in Table 1.

(Evaluation Criteria)

· Score 5: The number of detached pieces of the active material layer is 0.
· Score 4: The number of detached pieces of the active material layer is from 1 to 5.
· Score 3: The number of detached pieces of the active material layer is from 6 to 20.
· Score 2: The number of detached pieces of the active material layer is from 21 to 40.
· Score 1: The number of detached pieces of the active material layer is 41 or more.

<Evaluation of Number of Broken Particles (Particle Shape Maintenance) of Polymer (A) in Positive Electrode Coating Layer>

The surface of the positive electrode for a nonaqueous secondary battery obtained in the foregoing was observed for the particles of the polymer (A) with a scanning electron microscope (SEM, manufactured by JEOL Ltd., model: "JSM-6360LA"), and the number of particles broken by the press working per 100 particles of the polymer (A) was measured. In such measurement, when a boundary line between a particle and another particle can be observed, it is judged that the particles maintain their particle shapes, and are hence not broken. When a boundary line between a particle and another particle cannot be observed, it is judged that the particles collapse, and are hence broken. Evaluation criteria are as described below. The evaluation result is shown in Table 1.

(Evaluation Criteria)

·Score 5: When the number of broken particles is 10 or less, the polymer particles extremely rarely have their interfaces compression-bonded and are excellent.
·Score 4: When the number of broken particles is 11 or more and 20 or less, the polymer particles rarely have their interfaces compression-bonded and are satisfactory.
·Score 3: When the number of broken particles is 21 or more and 30 or less, the polymer particles are found to have compression-bonded interfaces but are usable.
·Score 2: When the number of broken particles is 31 or more and 40 or less, the polymer particles are found to have a large number of compression-bonded interfaces and hence are unusable.
·Score 1: When the number of broken particles is 41 or more, the polymer particles are found to have a large number of compression-bonded interfaces and hence are unusable.

5.1.5. Production of Nonaqueous Secondary Battery and Evaluations of its Physical Properties

(1) Preparation of Slurry for Nonaqueous Secondary Battery Negative Electrode and Production of Negative Electrode for Nonaqueous Secondary Battery

1 Part by mass (in terms of solid content) of a thickener (product name: "CMC-2200", manufactured by Daicel Corporation), 100 parts by mass (in terms of solid content) of graphite serving as a negative electrode active material, and 68 parts by mass of water were loaded into a twin-screw planetary mixer (manufactured by PRIMIX Corporation, product name: "T.K. HIVIS MIX 2P-03"), and were stirred at 60 rpm for 1 hour.

Next, a SBR (product name: "TRD105A", manufactured by JSR Corporation) was added in an amount corresponding to 2 parts by mass (in terms of solid content) to the mixture, and the whole was further stirred for 1 hour to provide a paste. Water was loaded into the resultant paste to adjust its solid content concentration to 50%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum at 1,800 rpm for 1.5 minutes. Thus, a slurry for a nonaqueous secondary battery negative electrode was prepared.

Next, the slurry for a nonaqueous secondary battery negative electrode prepared in the foregoing was uniformly applied to the surface of a current collector formed of copper foil having a thickness of 20 $\mu$m by a doctor blade method so that its thickness after drying became 80 $\mu$m, followed by drying treatment at 120°C for 20 minutes. After that, press working was performed with a roll pressing machine so that the density of the formed film (negative electrode active material layer) became 1.9 g/cm$^3$. Thus, a negative electrode for a nonaqueous secondary battery was obtained.

(2) Assembly of Nonaqueous Secondary Battery (Lithium Ion Battery)

In a glove box in which Ar purging had been performed so that the dew point was -80°C or less, the negative electrode for a nonaqueous secondary battery produced in the foregoing that had been punch-molded into a circular shape having a diameter of 15.95 mm was mounted on a bipolar coin cell (manufactured by Hohsen Corp., product name: "HS Flat Cell").

Next, a separator (manufactured by Celgard LLC, product name: "CELGARD #2400") formed of a polypropylene-made porous membrane punched into a circular shape having a diameter of 24 mm was superimposed and mounted on the negative electrode for a nonaqueous secondary battery.

Further, 500 $\mu$L of an electrolytic solution was injected into the bipolar coin cell so that air did not enter. After that, the positive electrode for a nonaqueous secondary battery produced in the foregoing that had been punch-molded into a circular shape having a diameter of 16.16 mm was superimposed and mounted on the separator, and the exterior body of the bipolar coin cell was sealed by tightening its screws. Thus, a lithium ion battery cell (an example of a nonaqueous secondary battery) was assembled. The electrolytic solution used here is a solution obtained by dissolving LiPF$_6$ at a concentration of 1 mol/L in a solvent containing ethylene carbonate and ethyl methyl carbonate at 1/1 (mass ratio).

(3) Evaluations of Physical Properties of Nonaqueous Secondary Battery

<Evaluation of Cycle Characteristic>

For the nonaqueous secondary battery produced in the foregoing, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. A capacity retention ratio was calculated by the following equation and evaluated by the following criteria. The evaluation result is shown in Table 1.

Capacity retention ratio (%)=(discharge capacity in 100th cycle)/(discharge capacity in 1st cycle)

(Evaluation Criteria)

·Score 5: The capacity retention ratio is 95% or more.
·Score 4: The capacity retention ratio is 90% or more and less than 95%.
·Score 3: The capacity retention ratio is 85% or more and less than 90%.
·Score 2: The capacity retention ratio is 80% or more and less than 85%.
·Score 1: The capacity retention ratio is 75% or more and less than 80%.
·Score 0: The capacity retention ratio is less than 75%.

<Evaluation of Resistance Increase Rate>

For the nonaqueous secondary battery produced in the foregoing, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (0.05C). The time point when the voltage reached 3.0 V was defined as discharge completion (cut-off), and a discharge capacity in the 0th cycle was calculated. Further, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. After charge and discharge had been repeated 100 times, charge and discharge were performed in the same manner as in the 0th cycle, and a discharge capacity in the 101st cycle was evaluated. A resistance increase rate was calculated by the following equation and evaluated by the following criteria.

Resistance increase rate (%) =(discharge capacity in 101st cycle-discharge capacity in 100th cycle)/(discharge capacity in 0th cycle-discharge capacity in 1st cycle)$\times$100

(Evaluation Criteria)

·Score 5: The resistance increase rate is 100% or more and less than 110%.
·Score 4: The resistance increase rate is 110% or more and less than 120%.
·Score 3: The resistance increase rate is 120% or more and less than 130%.
·Score 2: The resistance increase rate is 130% or more and less than 140%.
·Score 1: The resistance increase rate is 140% or more and less than 150%.
·Score 0: The resistance increase rate is 150% or more.

In the measurement conditions, "1C" refers to a current value at which discharge is completed in 1 hour when a cell having a certain electric capacity is subjected to constant-current discharge. For example, "0.1C" refers to a current value at which discharge is completed in 10 hours, and "10C" refers to a current value at which discharge is completed in 0.1 hour.

5.2. Examples 2 to 14 and Comparative Examples 1 to 6

Aqueous dispersions each containing 30 mass% of polymer particles were each obtained in the same manner as in the "5.1.1. Preparation of Binder Composition for Electrical Storage Device" section except that the kinds and amounts of the respective monomers were set as shown in Table 1 or Table 2. Slurries for electrical storage device electrodes were each prepared, and electrical storage device electrodes and electrical storage devices were each produced, in the same manner as in Example 1 except the foregoing, followed by their evaluations in the same manner as in Example 1.

Table 1

| Polymer | | | Example | | | | | | | | | |
|---|---|---|---|---|---|---|---|---|---|---|---|---|
| Classification | | Monomer name | 1 | 2 | 3 | 4 | 5 | 6 | 7 | 8 | 9 | 10 |
| (a1) | Unsaturated carboxylic acid ester having alicyclic hydrocarbon group | CHMA | 1 | 30 | 30 | 3 | 20 | 10 | 10 | | 20 | 5 |
| | | CHA | | 10 | | | | 10 | 5 | 10 | 5 | 15 |
| (a2) | Unsaturated carboxylic acid ester having aliphatic hydrocarbon group | 2EHA | 58 | 15 | 5 | 90 | | 65 | 50 | 50 | | 50 |
| | | BA | 10 | 10 | 40 | | 50 | | | 20 | 55 | |
| | | BMA | 5 | | | | 10 | | | | | 5 |
| | | MMA | | 25 | | | | | 10 | | | |
| | | EA | 5 | | | | | | 10 | | | 5 |
| (a3) | Polyfunctional (meth)acrylic acid ester | EDMA | | 1 | 5 | | 1 | 1 | | | | |
| | | AMA | 2 | | | 2 | 1 | | | 2 | 3 | |
| (a4) | Other unsaturated carboxylic acid ester | HEMA | | 3 | | | 1 | | | | | |
| | | HEA | | | | | 1 | | | | | 3 |
| | | GLM | | | | | 1 | | | | | 2 |
| (a5) | Unsaturated carboxylic acid | TA | | | | 1 | | 1 | 2 | | | 3 |
| | | AA | 3 | 1 | 2 | 1 | 5 | 4 | 3 | 3 | 0.1 | 4 |
| | | MAA | | | | 1 | 3 | 1 | | | | 3 |
| (a6) | Aromatic vinyl compound | ST | 10 | 4 | 10 | 2 | 1 | | | 13 | 3 | 3 |
| | | DVB | | 1 | | | 4 | | 1 | 1 | 2 | 2 |
| (a7) | (Meth) acrylamide | AAM | 2 | | | | | | 1 | | 2 | |
| | | MAM | | | | | | | 2 | | 2 | |
| (a8) | $\alpha,\beta$- Unsaturated nitrile compound | AN | 3 | | 5 | | | 8 | | 1 | 5 | |
| (a9) | Compound having sulfonic acid group | NASS | 1 | | 3 | | 2 | | 6 | | 2.9 | |

(continued)

| Polymer | | | Example | | | | | | | | | |
|---------|---|---|---|---|---|---|---|---|---|---|---|---|
| Classification | | Monomer name | 1 | 2 | 3 | 4 | 5 | 6 | 7 | 8 | 9 | 10 |
| Number of parts of composition | (a1) | | 1 | 40 | 30 | 3 | 20 | 20 | 15 | 10 | 25 | 20 |
| | (a2) | | 78 | 50 | 45 | 90 | 60 | 65 | 70 | 70 | 55 | 60 |
| | (a6) | | 10 | 5 | 10 | 2 | 5 | 0 | 1 | 14 | 5 | 5 |
| | (a5) | | 3 | 1 | 2 | 3 | 8 | 6 | 5 | 3 | 0.1 | 10 |
| | (al)+(a2) | | 79 | 90 | 75 | 93 | 80 | 85 | 85 | 80 | 80 | 80 |
| | Total | | 100 | 100 | 100 | 100 | 100 | 100 | 100 | 100 | 100 | 100 |
| Physical property | Electrolytic solution swelling ratio (mass%) | | 180 | 190 | 130 | 180 | 120 | 200 | 170 | 150 | 130 | 130 |
| | Glass transition temperature (°C) | | -40 | 60 | 20 | -60 | 10 | -20 | -10 | -30 | 10 | 0 |
| | pH | | 8.0 | 7.5 | 7.0 | 8.5 | 6.0 | 9.0 | 9.5 | 8.0 | 7.5 | 5.5 |
| | Number average particle diameter (nm) | | 100 | 150 | 200 | 250 | 300 | 350 | 400 | 500 | 50 | 150 |
| | Surface acidity (mmol/g) | | 0.6 | 0.1 | 0.4 | 0.6 | 2.5 | 0.6 | 2 | 0.6 | 0.0 5 | 3 |
| Characteristic | Adhesive strength | | 5 | 5 | 4 | 5 | 3 | 4 | 4 | 5 | 4 | 4 |
| | Cycle characteristic | | 5 | 3 | 5 | 4 | 5 | 4 | 5 | 5 | 5 | 5 |
| | Particle shape maintenance | | 5 | 4 | 4 | 3 | 5 | 4 | 5 | 5 | 5 | 5 |
| | Resistance increase rate | | 5 | 5 | 5 | 3 | 5 | 5 | 5 | 5 | 5 | 5 |

Table 2

| Polymer Classification | Monomer name | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| (a1) Unsaturated carboxylic acid ester having alicyclic hydrocarbon group | CHMA | 20 | | 15 | 15 | 0 | 20 | 30 | 3 | | 10 |
| | CHA | | 10 | | | | 25 | 5 | | 15 | |
| (a2) Unsaturated carboxylic acid ester having aliphatic hydrocarbon group | 2EHA | 50 | | 30 | 20 | 63 | | 20 | 55 | 65 | 65 |
| | BA | | 50 | 30 | 20 | | 45 | 20 | 30 | | |
| | BMA | | 5 | | | 5 | | | 5 | | 10 |
| | MMA | | 5 | | 5 | 5 | 5 | | | | |
| | EA | | 5 | | 5 | 5 | | | 5 | | |
| (a3) Polyfunctional (meth)acrylic acid ester | EDMA | 1 | | | | 1 | | 1 | | 5 | |
| | AMA | 1 | | | 2 | 1 | | 1 | | | |
| (a4) Other unsaturated carboxylic acid ester | HEMA | 6 | | | 2 | | | 1 | | | |
| | HEA | 1 | | | 2 | | | 1 | | | |
| | GLM | 1 | | | 2 | | | 1 | | | |
| (a5) Unsaturated carboxylic acid | TA | | | 5 | 3 | | | | | | |
| | AA | 4 | 5 | 5 | | 5 | | 2 | 1 | 3 | 2 |
| | MAA | | | 5 | 2 | | 4 | 2 | | | |
| (a6) Aromatic vinyl compound | ST | 11 | 18 | 9 | 11 | 9 | | 10 | | | 3 |
| | DVB | 1 | 2 | 1 | 1 | 1 | 1 | | 1 | 10 | |
| (a7) (Meth)acrylamide | AAM | | | | | | | 2 | | | |
| | MAM | | | | 2 | | | 1 | | | |
| (a8) α,β-Unsaturated nitrile compound | AN | 4 | | 5 | 5 | 3 | | | | 2 | 10 |
| (a9) Compound having sulfonic acid group | NASS | | | 3 | 3 | 2 | | 3 | | | |

(continued)

| Polymer | | | Example | | | | Comparative Example | | | | | |
|---|---|---|---|---|---|---|---|---|---|---|---|---|
| Classification | Monomer name | 11 | 12 | 13 | 14 | 1 | 2 | 3 | 4 | 5 | 6 |
| Number of parts of composition | (a1) | 20 | 10 | 15 | 15 | 0 | 45 | 35 | 3 | 15 | 10 |
| | (a2) | 50 | 65 | 60 | 50 | 78 | 50 | 40 | 95 | 65 | 75 |
| | (a6) | 12 | 20 | 10 | 12 | 10 | 1 | 10 | 1 | 10 | 3 |
| | (a5) | 4 | 5 | 15 | 5 | 5 | 4 | 4 | 1 | 3 | 2 |
| | (a1)+(a2) | 70 | 75 | 75 | 65 | 78 | 95 | 75 | 98 | 80 | 85 |
| | Total | 100 | 100 | 100 | 100 | 100 | 100 | 100 | 100 | 100 | 100 |
| Physical property | Electrolytic solution swelling ratio (mass%) | 140 | 150 | 140 | 160 | 150 | 180 | 170 | 190 | 110 | 250 |
| | Glass transition temperature (°C) | 10 | 30 | -10 | 40 | -20 | 40 | 30 | -40 | -10 | 0 |
| | pH | 8.0 | 8.5 | 4.5 | 7.5 | 7.5 | 9.0 | 8.0 | 9.0 | 5.0 | 9.5 |
| | Number average particle diameter (nm) | 200 | 250 | 300 | 200 | 100 | 150 | 200 | 300 | 250 | 200 |
| | Surface acidity (mmol/g) | 0.8 | 1 | 3.5 | 1.5 | 1.5 | 1 | 0.8 | 0.2 | 0.6 | 0.4 |
| Characteristic | Adhesive strength | 5 | 3 | 3 | 3 | 2 | 1 | 1 | 2 | 1 | 3 |
| | Cycle characteristic | 5 | 3 | 4 | 4 | 2 | 1 | 2 | 1 | 2 | 1 |
| | Particle shape maintenance | 5 | 4 | 4 | 4 | 2 | 3 | 3 | 1 | 2 | 1 |
| | Resistance increase rate | 5 | 3 | 4 | 4 | 2 | 3 | 3 | 1 | 2 | 1 |

The abbreviations of the respective monomers in Table 1 and Table 2 represent the following monomers.

<Unsaturated Carboxylic Acid Ester having Alicyclic Hydrocarbon Group>

·CHMA: cyclohexyl methacrylate
·CHA: cyclohexyl acrylate

<Unsaturated Carboxylic Acid Ester having Aliphatic Hydrocarbon Group>

·2EHA: 2-ethylhexyl acrylate
·BA: n-butyl acrylate
·BMA: n-butyl methacrylate
·MMA: methyl methacrylate
·EA: ethyl acrylate

<Polyfunctional (Meth)acrylic Acid Ester>

·EDMA: ethylene glycol dimethacrylate
·AMA: allyl methacrylate

<Other Unsaturated Carboxylic Acid Ester>

·HEMA: 2-hydroxyethyl methacrylate
·HEA: 2-hydroxyethyl acrylate
·GLM: glycerin monomethacrylate

<Unsaturated Carboxylic Acid>

·TA: itaconic acid
·AA: acrylic acid
·MAA: methacrylic acid

<Aromatic Vinyl Compound>

·ST: styrene
·DVB: divinylbenzene

< (Meth)acrylamide >

·AAM: acrylamide
·MAM: methacrylamide

<α,β-Unsaturated Nitrile Compound>

·AN: acrylonitrile

<Compound having Sulfonic Acid Group>

·NASS: sodium styrenesulfonate

5.3. Examples 15 to 20

Slurries for electrical storage device electrodes were each prepared, and electrical storage device electrodes and electrical storage devices were each produced, in the same manner as in Example 12 except that in Example 12, the content ratios of the polymer (A), the CMC (product name: "CMC-2200", manufactured by Daicel Corporation), and alginic acid (product name: "Sodium Alginate 80-120", manufactured by FUJIFILM Wako Pure Chemical Corporation) were set as shown in Table 3, followed by their evaluations in the same manner as in Example 12 above. The results are shown in Table 3.

Table 3

|  |  | Example | | | | | |
|---|---|---|---|---|---|---|---|
|  |  | 15 | 16 | 17 | 18 | 19 | 20 |
| Binder | Example 12 | 2 | 2 | 2 | 2 | 4 | 4 |
| Thickener | CMC | 1 | 2 |  | 1 | 2 | 4 |
|  | Alginic acid |  |  | 2 | 1 |  |  |
| Physical property | Adhesive strength | 3 | 4 | 4 | 4 | 5 | 5 |
|  | Cycle characteristic | 3 | 4 | 4 | 4 | 4 | 5 |
|  | Particle shape maintenance | 4 | 4 | 4 | 4 | 4 | 5 |
|  | Resistance increase rate | 3 | 4 | 4 | 4 | 4 | 5 |

5.4. Example 21

An adhesive strength and a cycle characteristic were each evaluated in the same manner as in Example 5 except that the binder to be used in the slurry for a nonaqueous secondary battery negative electrode prepared in Example 5 was changed from the TRD105A to the polymer (A) prepared in Example 5. The results are shown in Table 4.

Table 4

| Negative electrode, graphite | | Example | |
|---|---|---|---|
|  |  | 5 | 21 |
| Binder | SBR | 2 |  |
|  | Example 5 |  | 2 |
| Thickener | CMC | 1 | 1 |
| Physical property | Adhesive strength | 5 | 5 |
|  | Cycle characteristic | 4 | 5 |

5.5. Evaluation Results

As is apparent from Table 1 above and Table 2 above, in each of the slurries for electrical storage device electrodes prepared by using the binder compositions for electrical storage devices according to the present invention described in Examples 1 to 14, the active material were able to be suitably bound to each other as compared to those in the cases of Comparative Examples 1 to 6, and hence an electrical storage device electrode having a satisfactory charge-discharge durability characteristic was obtained. This is assumed to be because of the following reason. The value of the electrolytic solution swelling ratio of the polymer (A) to be incorporated into each of the binder compositions of Examples 1 to 14 shown in Table 1 above and Table 2 above is as low as from 120 mass% to 200 mass%. Accordingly, the coverage of the polymer on the active material is maintained, and as a result, the insertion and extraction of lithium ions are facilitated. Thus, the resistance of the electrode was able to be reduced without inhibition of the permeability of the electrolytic solution between the active materials, and as a result, the electrode showed a satisfactory charge-discharge durability characteristic.

As is apparent from the results of Table 3 above, it is understood that according to the slurry for an electrical storage device electrode according to the present invention using the polymer (A) and the thickener in combination, the active materials can be more suitably bound to each other, and moreover, adhesiveness between the active material layer and the current collector can be satisfactorily maintained. In particular, it is found that the slurries for electrical storage device electrodes prepared by using the binder compositions for electrical storage devices shown in Examples 17 and 18 can each suitably bind t the active materials to each other, and moreover, can each satisfactorily maintain adhesiveness between the active material layer and the current collector, despite the combined use of alginic acid as the thickener.

As is apparent from the results of Table 4 above, the slurry for an electrical storage device electrode prepared by using the binder composition for an electrical storage device according to the present invention described in Example 21 showed satisfactory results even when the negative electrode active material was used. The resultant electrical storage device showed a satisfactory charge-discharge characteristic probably because the electrolytic solution affinity of the polymer in the slurry was improved, and hence the insertion and extraction of Li ions into and from the negative electrode active material were facilitated to reduce the resistance of the device.

The present invention is not limited to the embodiments described above, and various modifications may be made thereto. The present invention encompasses substantially the same configurations as the configurations described in the embodiments (e.g., configurations having the same functions, methods, and results, or configurations having the same objects and effects). The present invention also encompasses configurations obtained by replacing non-essential parts of the configurations described in the embodiments with other configurations. The present invention also encompasses configurations exhibiting the same actions and effects or configurations capable of achieving the same objects as those of the configurations described in the embodiments. The present invention also encompasses configurations obtained by adding known technologies to the configurations described in the embodiments.

## Claims

1. A binder composition for an electrical storage device, comprising:

    a polymer (A); and
    a liquid medium (B),
    wherein when a total of repeating units in the polymer (A) is defined as 100 mass%, the polymer (A) contains

        1 mass% to 40 mass% of a repeating unit (a1) derived from an unsaturated carboxylic acid ester having an alicyclic hydrocarbon group, and
        45 mass% to 90 mass% of a repeating unit (a2) derived from an unsaturated carboxylic acid ester having an aliphatic hydrocarbon group excluding the unsaturated carboxylic acid ester having an alicyclic hydrocarbon group, and

    wherein the polymer (A) shows a swelling ratio of 120 mass% or more and 200 mass% or less when immersed in a solvent, which is formed of propylene carbonate and diethyl carbonate at a volume fraction of 1:1, under conditions of 70°C and 24 hours.

2. The binder composition for an electrical storage device according to claim 1, wherein the polymer (A) further contains 0.1 mass% to 10 mass% of a repeating unit (a5) derived from an unsaturated carboxylic acid.

3. The binder composition for an electrical storage device according to claim 1 or 2, wherein the polymer (A) further contains 1 mass% to 14 mass% of a repeating unit (a6) derived from an aromatic vinyl compound.

4. The binder composition for an electrical storage device according to any one of claims 1 to 3, wherein a total amount of the repeating unit (a1) and the repeating unit (a2) in the polymer (A) is 70 mass% or more.

5. The binder composition for an electrical storage device according to any one of claims 1 to 4, wherein when the polymer (A) is subjected to differential scanning calorimetry (DSC) in conformity with JIS K7121:2012, an endothermic peak is observed in a temperature range of from -60°C to 60°C.

6. The binder composition for an electrical storage device according to any one of claims 1 to 5,

   wherein the polymer (A) is polymer particles, and
   wherein the polymer particles have a number average particle diameter of 50 nm or more and 500 nm or less.

7. The binder composition for an electrical storage device according to claim 6, wherein the polymer (A) has a surface acidity of 0.05 mmol/g or more and 3 mmol/g or less.

8. A slurry for an electrical storage device electrode, comprising:

   the binder composition for an electrical storage device of any one of claims 1 to 7; and
   an active material.

9. The slurry for an electrical storage device electrode according to claim 8, wherein the active material is a positive electrode active material.

10. The slurry for an electrical storage device electrode according to claim 8, wherein the active material contains a silicon material.

11. An electrical storage device electrode, comprising:

    a current collector; and
    an active material layer formed on a surface of the current collector by applying and drying the slurry for an electrical storage device electrode of any one of claims 8 to 10.

12. An electrical storage device, comprising the electrical storage device electrode of claim 11.

## INTERNATIONAL SEARCH REPORT

International application No.

**PCT/JP2022/028623**

### A. CLASSIFICATION OF SUBJECT MATTER

*H01M 4/62*(2006.01)i; *H01G 11/38*(2013.01)i; *H01M 4/13*(2010.01)i; *H01M 4/139*(2010.01)i
FI: H01M4/62 Z; H01G11/38; H01M4/13; H01M4/139

According to International Patent Classification (IPC) or to both national classification and IPC

### B. FIELDS SEARCHED

Minimum documentation searched (classification system followed by classification symbols)

H01M4/62; H01G11/38; H01M4/13; H01M4/139

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-225465 A (JSR CORP) 04 December 2014 (2014-12-04)<br>claim 1, paragraphs [0018], [0029], [0051], example C7 | 1-12 |
| A | JP 2020-184462 A (JSR CORP) 12 November 2020 (2020-11-12)<br>claims 1-2, paragraph [0050] | 1-12 |
| A | JP 2017-168213 A (TOYO INK SC HOLDINGS CO LTD) 21 September 2017 (2017-09-21)<br>paragraph [0067], example 8 | 1-12 |
| A | JP 2019-179698 A (ASAHI KASEI CORP) 17 October 2019 (2019-10-17)<br>examples, tables 3-10 | 1-12 |
| A | JP 2018-181853 A (LINTEC CORP) 15 November 2018 (2018-11-15)<br>examples 1-7 | 1–12 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/028623**

| Patent document cited in search report | | | Publication date (day/month/year) | Patent family member(s) | | | Publication date (day/month/year) |
|---|---|---|---|---|---|---|---|
| JP | 2014-225465 | A | 04 December 2014 | US | 2016/0079007 | A1 | |
| | | | | claim 1, paragraphs [0050]-[0055], [0105]-[0108], example C7 | | | |
| | | | | WO | 2014/157715 | A1 | |
| | | | | CN | 105103349 | A | |
| | | | | KR | 10-2015-0135207 | A | |
| JP | 2020-184462 | A | 12 November 2020 | WO | 2020/226035 | A1 | |
| | | | | EP | 3968417 | A1 | |
| | | | | claims 1-3, paragraph [0058] | | | |
| | | | | CN | 113795950 | A | |
| JP | 2017-168213 | A | 21 September 2017 | (Family: none) | | | |
| JP | 2019-179698 | A | 17 October 2019 | (Family: none) | | | |
| JP | 2018-181853 | A | 15 November 2018 | (Family: none) | | | |

Form PCT/ISA/210 (patent family annex) (January 2015)

**EP 4 391 116 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007294323 A
- WO 2010113940 A1
- JP 2012216322 A
- JP 5999399 B
- JP 5477610 B
- JP 2020184461 A